# EUROPÄISCHE PATENTANMELDUNG

(11) **EP 4 748 470 A1**
(43) Veröffentlichungstag der Anmeldung: **27.05.2026**
(21) Anmeldenummer: 25217355.4
(22) Anmeldetag: 20.11.2025
(51) Int. Cl.: B01D 46/24, B01D 46/42, B01D 46/71, G01F 1/684

(54) **BAUTEIL FÜR EINE FILTEREINHEIT**

(30) Priorität: 25.11.2024 DE 102024134664
(71) Anmelder: Carl Freudenberg KG, 69469 Weinheim (DE)
(72) Erfinder: Schumacher, Sascha, 69483 Wald-Michelbach (DE); Kluck, Dr. Stefan, 77836 Rheinmünster (DE)

(57) **Zusammenfassung**

Die Erfindung betrifft ein Bauteil (10) für eine Filtereinheit (100), wobei das Bauteil (10) in einem Luftstrom anordenbar ist, welcher zumindest teilweise die Filtereinheit (100) durchströmt, wobei das Bauteil (10) zumindest in einem vorbestimmten Bereich (12) eine Vielzahl von Profilen (14) aufweist, welche anhand eines vorbestimmten Musters (16) zueinander angeordnet sind, wobei die Vielzahl von Profilen dazu eingerichtet ist, zumindest teilweise eine turbulente Grenzschicht auszubilden, um einen Strömungswiderstand des Luftstroms an dem Bauteil (10) zu reduzieren.

## Beschreibung

Die vorliegende Erfindung betrifft ein Bauteil für eine Filtereinheit, eine Filtereinheit sowie ein Luftreinigungssystem.

Derzeit besteht eine Vielzahl von unterschiedlichen Lösungen zur Ausgestaltung von luftführenden Bauteilen an Filterbaugruppen. Durch die zunehmende Anzahl von Luftfiltern im Bereich von Luftreinigungssystemen als auch die erhöhten Qualitäts- und Leistungsanforderungen steigt kontinuierlich der Bedarf an innovativen und robusten Lösungen für Luftführungslösungen.

### Offenbarung der Erfindung

Mit Ausführungsform der Erfindung kann vorteilhafterweise ein verbessertes Bauteil für eine Filtereinheit bereitgestellt werden. Die Erfindung ist in den unabhängigen Ansprüchen definiert. Vorteilhafte Weiterbildungen der Erfindung ergeben sich aus den abhängigen Ansprüchen und der nachfolgenden Beschreibung.

Ein Vorteil des Bauteils mit den Merkmalen des Anspruchs 1 ist, dass eine Optimierung des Differenzdruckes zwischen einer Luft-Eingangsseite und einer Luft-Ausgangsseite des Bauteils erfolgen kann. Somit kann insbesondere mittels der Vielzahl von Profilen verhindert werden, dass sich ein Luftstrom früher von der Oberfläche des Bauteils löst. Weiter bevorzugt können mithilfe des Bauteiles die Energieverluste, welche maßgeblich durch eine Wirbelbildung bei dem Austritt des Luftstromes aus dem Bauteil entstehen können, reduziert werden.

Dies wird erfindungsgemäß dadurch erreicht, dass das Bauteil für eine Filtereinheit in einem Luftstrom anordenbar ist, welcher zumindest teilweise die Filtereinheit durchströmt, wobei das Bauteil zumindest in einem vorbestimmten Bereich eine Vielzahl von Profilen aufweist, welche anhand eines vorbestimmten Musters zueinander angeordnet sind, wobei die Vielzahl von Profilen dazu eingerichtet ist, zumindest teilweise eine turbulente Grenzschicht auszubilden, um einen Strömungswiderstand des Luftstroms an dem Bauteil zu reduzieren.

**In** anderen Worten kann mithilfe der Vielzahl von Profilen eine turbulente Grenzschicht ausgebildet werden, welche die Strömungseigenschaften des Luftstroms verbessern können. Beispielsweise kann die Vielzahl von Profilen in Zusammenwirkung mit dem vorbestimmten Muster derart ausgestaltet und positioniert zueinander sein, dass diese eine Golfballstruktur oder eine Haifischhaut oder Ähnliches ausbilden können. Bevorzugt können die Profile Ausnehmungen, Wölbungen oder ähnliches sein. Das vorbestimmte Muster definiert die Positionen der Profile zueinander. Für den Fall, dass die Profile kugelförmige Ausnehmungen sind kann ein jeder Mittelpunkt dieser Ausnehmungen als Referenz für das Muster verwendet werden, sodass eine Vielzahl von einander angrenzenden Ausnehmungen entstehen können. Beispielsweise kann mittels der Golfballstruktur eine turbulente Grenzschicht entstehen, wenn der Luftstrom an der Vielzahl von vorbestimmten Profilen vorbeiströmt. Durch die turbulente Grenzschicht an der Vielzahl von Profilen liegt der Luftstrom länger an im Vergleich zu bisherigen Lösungen oder einer glatten Oberfläche. Beispielsweise kann die Vielzahl von Profilen mittels eines Spritzgusswerkzeuges bei der Urformung des Bauteils eingebracht werden. Weiter bevorzugt kann das Bauteil ein Gehäuseelement einer Filtereinheit sein.

Die Unteransprüche zeigen bevorzugte Weiterbildungen der Erfindung.

Weiter bevorzugt weist die Vielzahl von Profilen jeweils eine im Wesentlichen kugelförmige Ausnehmung auf.

Ein Vorteil dieser Ausführungsform ist, dass die kugelförmigen Ausnehmungen relativ einfach mittels eines angepassten Kunststoffspritzgießwerkzeuges in das Bauteil bei dessen Urformung eingebracht werden können, sodass die Herstellkosten für das Bauteil gering bleiben, auch bei einer zunehmenden Funktion des Bauteils. Weiter bevorzugt können unter den Begriff im Wesentlichen kugelförmige Ausnehmungen auch Ausnehmungen oder ähnliches fallen, welche sphärisch, teilkugelförmig, kalottenförmig oder ähnlich ausgestaltet sind.

Weiter bevorzugt ist die Vielzahl von im Wesentlichen kugelförmigen Ausnehmungen in Zusammenwirkung mit dem vorbestimmten Muster dazu eingerichtet, eine Golfballstruktur auszubilden, um die turbulente Grenzschicht auszubilden.

Ein Vorteil dieser Ausführungsform ist, dass die Golfballstruktur gut an eine jeweilige Durchströmungsgeschwindigkeit durch das Bauteil angepasst werden kann. Bevorzugt können die Ausnehmungen als sogenannte Dimples ausgebildet werden, die eine Oberflächenreibung reduzierende Struktur ausbilden. Durch die Ausnehmungen bilden sich kleine regelmäßige Turbulenzen, die die Strömung vom Bauteil ablösen und den Gesamtwiderstand verringern. Durch die Vielzahl von regelmäßigen Turbulenzen kann die turbulente Grenzschicht ausgebildet werden. Weiter bevorzugt kann durch ein Zusammenwirken von Leitrippen und den Vielzahl von Ausnehmungen die Druckunterschiede an dem Bauteil weiter reduziert werden.

Weiter bevorzugt weist das Bauteil eine erste Oberfläche und eine zweite Oberfläche auf, wobei die erste Oberfläche und die zweite Oberfläche im Wesentlichen orthogonal zueinander angeordnet sind, wobei der vorbestimmte Bereich ein Übergangsbereich zwischen der ersten Oberfläche und der zweiten Oberfläche ist.

Ein Vorteil dieser Ausführungsform ist, dass der Aufwand zum Einbringen der Profile geringgehalten werden kann, da diese lediglich im Übergangsbereich angeordnet sein sollten aufgrund der Feststellung, dass die Profile in diesem Bereich einen besonders hohen Wirkungsgrad aufweisen. Bevorzugt kann die erste Oberfläche zur zweiten Oberfläche im Wesentlichen orthogonal angeordnet sein.

Weiter bevorzugt ist die turbulente Grenzschicht dazu eingerichtet, den Luftstrom in dem vorbestimmten Bereich entlang einer Flussrichtung des Luftstroms zumindest teilweise an dem Bauteil zu halten, sodass sich ein Punkt, bei dem sich der Luftstrom von dem Bauteil löst, entlang der Flussrichtung und entlang des vorbestimmten Bereichs verschiebt.

Ein Vorteil dieser Ausführungsform ist, dass sich der Luftstrom länger an dem Bauteil hält, sodass der Strömungswiderstand sich weiter reduziert. Weiter bevorzugt kann das Bauteil zumindest teilweise eine sich entlang des Luftstroms aufweitende Düse aufweisen, sodass der Luftstrom mittels der turbulenten Grenzschicht länger an dem zunehmenden Durchmesser der Düse gehalten wird.

Vorzugsweise weist das Bauteil eine erste Sektion und eine zweite Sektion auf, wobei die erste Sektion innerhalb der Filtereinheit anordenbar ist, wobei die zweite Sektion außerhalb der Filtereinheit anordenbar ist, wobei die zweite Sektion den vorbestimmten Bereich mit der Vielzahl von Profilen aufweist, wobei die erste Sektion eine zweite Vielzahl von Profilen aufweist, welche dazu eingerichtet ist, eine zweite turbulente Grenzschicht auszubilden, um den Strömungswiderstand an dem Bauteil in der ersten Sektion zu reduzieren.

Ein Vorteil dieser Ausführungsform ist, dass in Abhängigkeit der Position der jeweiligen Sektionen die Anzahl als auch Ausgestaltung der Profile an die jeweilige Sektion angepasst werden kann. Somit kann auf unterschiedliche Strömungsverhältnisse gezielt eingegangen werden.

Weiter bevorzugt weist das Bauteil zwischen der ersten Sektion und der zweiten Sektion eine Engstelle auf, wobei die zweite turbulente Grenzschicht in der ersten Sektion dazu eingerichtet ist, den Strömungswiderstand des Luftstroms hin zur Engstelle zu reduzieren, wobei die turbulente Grenzschicht in der zweiten Sektion dazu eingerichtet ist, den Strömungswiderstand des Luftstroms weg von der Engstelle zu reduzieren.

Ein Vorteil dieser Ausführungsform ist, dass basierend auf den unterschiedlichen Querschnitten des Bauteils in der ersten Sektion als auch in der zweiten Sektion sich die Strömungsgeschwindigkeiten des Luftstroms unterscheiden, sodass durch eine individuelle Anpassung der jeweiligen turbulenten Grenzschichten in der ersten und zweiten Sektion die Effektivität bzw. der Gesamtdruckverlust verringert werden kann.

Weiter bevorzugt sind die turbulente Grenzschicht und die zweite turbulente Grenzschicht unterschiedlich voneinander. Vorzugsweise weist die erste Sektion eine erste Wirkung auf und die zweite Sektion eine zweite Wirkung auf, wobei die Wirkung der ersten Sektion dazu eingerichtet ist, die Ausbildung der zweiten turbulenten Grenzschicht zu unterstützen, wobei die Wirkung der zweiten Sektion dazu eingerichtet ist, die Ausbildung der turbulenten Grenzschicht zu unterstützen.

Weiter bevorzugt ist die Vielzahl von Profilen im Zusammenhang mit dem vorbestimmten Muster dazu eingerichtet, eine Haifischhaut auszubilden.

Ein Vorteil dieser Ausführungsform ist, dass mittels der Haifischhaut ein bionisches Mittel zur Verfügung steht, um den Strömungswiderstand am Bauteil zu reduzieren.

Ein weiterer Aspekt der Erfindung betrifft eine Filtereinheit, welche ein Filterelement und ein Bauteil wie voranstehend und nachfolgend beschrieben aufweist, wobei die Filtereinheit dazu eingerichtet ist, mittels des Filterelements eine vorbestimmte Auswahl an Elementen aus einem Luftstrom zu filtern, wobei die Filtereinheit dazu eingerichtet ist, den Luftstrom durch das Filterelement und das Bauteil zu führen.

Beispielsweise kann es sich bei dem Filterelement um einen Patronenfilter oder einen Kartuschenfilter oder Ähnliches handeln. Bevorzugt kann das Bauteil zumindest teilweise in das Filterelement eingreifen, sodass ein Luftstrom durch die Filtereinheit geleitet werden kann und durch das Bauteil zumindest teilweise austritt.

Ein weiterer Aspekt der Erfindung betrifft ein Luftreinigungssystem, welches ein Bauteil wie voranstehend und nachfolgend beschrieben und/oder eine Filtereinheit wie voranstehend und nachfolgend beschrieben aufweist.

Ferner ist darauf hinzuweisen, dass der Begriff der Einheit vorliegend ebenfalls breit zu verstehen ist und sowohl eine einteilige Ausbildung als auch eine mehrteilige Ausbildung der jeweiligen Einheiten umfasst, wobei die jeweiligen Teileinheiten nicht auf einer Position der Filtereinheit oder des Luftreinigungssystems vorgesehen sein müssen, sondern auch verteilt an der Filtereinheit oder am Luftreinigungssystem vorgesehen sein können.

Sämtliche Offenbarungen, welche voranstehend und nachfolgend in Bezug auf einen Aspekt der Erfindung beschrieben sind, gelten gleichermaßen für alle weiteren Aspekte der Erfindung.

Nachfolgend werden Ausführungsbeispiele der Erfindung unter Bezugnahme auf die begleitenden Zeichnungen im Detail beschrieben. Inhalt der Zeichnungen ist:
Figuren 1 und 3 ein Bauteil gemäß einer Ausführungsform.
Figuren 2 und 4 eine Filtereinheit gemäß einer Ausführungsform.
Figur 5 ein Luftreinigungssystem gemäß einer Ausführungsform.

### Ausführungsformen der Erfindung

Die Figuren sind lediglich schematisch und nicht maßstabsgetreu. **In** den Figuren können gleiche, gleichwirkende oder ähnliche Elemente mit den gleichen Bezugszeichen verwendet werden.

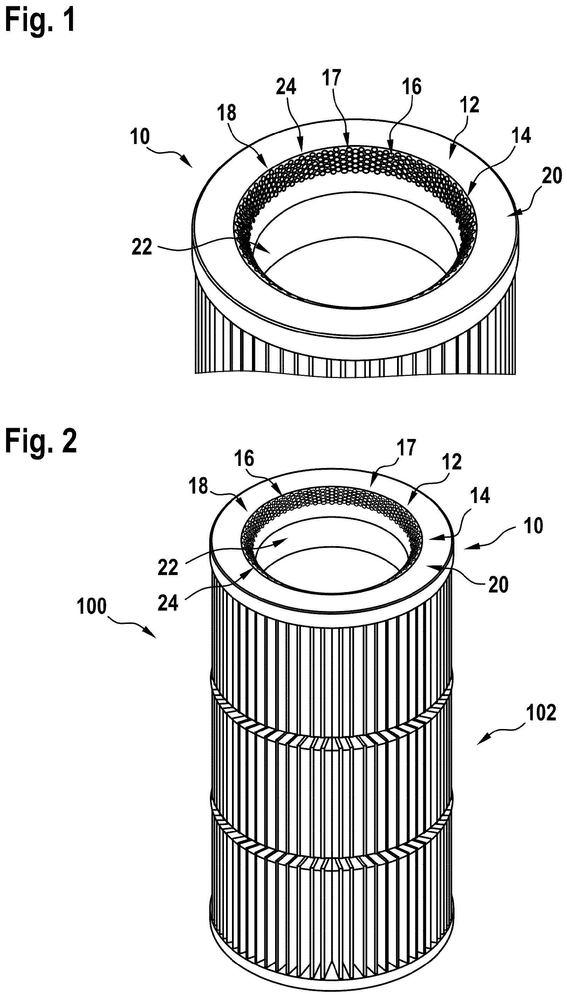

Fig. 1 zeigt ein Bauteil 10 gemäß einer Ausführungsform. Das Bauteil 10 für eine Filtereinheit 100 ist in einem Luftstrom anordenbar, welcher zumindest teilweise die Filtereinheit 100 durchströmt, wobei das Bauteil 10 zumindest in einem vorbestimmten Bereich 12 eine Vielzahl von Profilen 14 aufweist, welche anhand eines vorbestimmten Musters 16 zueinander angeordnet sind, wobei die Vielzahl von Profilen 14 dazu eingerichtet ist, zumindest teilweise eine turbulente Grenzschicht auszubilden, um einen Strömungswiderstand des Luftstroms an dem Bauteil 10 zu reduzieren.

Wie in der Fig. 1 zu erkennen ist, können die Vielzahl von Profilen 14 als im Wesentlichen kugelförmige Ausnehmungen 17 ausgebildet sein. Wenn die kugelförmigen Ausnehmungen 17 mittels des vorbestimmten Musters 16 angeordnet sind, können diese eine Golfballstruktur 18 ausbilden, wie dies in der Fig. 1 dargestellt ist. Weiter bevorzugt weist das Bauteil 10 in der Fig. 1 eine erste Oberfläche 20 und eine zweite Oberfläche 22 auf, welche im Wesentlichen orthogonal zueinander angeordnet sind. Dabei kann der vorbestimmte Bereich 12, in welchem die Vielzahl von Profilen anordenbar ist, in einem Übergangsbereich 24 sein, wobei der Übergangsbereich 24 zwischen der ersten Oberfläche 20 und der zweiten Oberfläche 22 ist. Wie in der Fig. 1 dargestellt ist, kann der Übergangsbereich 24 eine Verrundung oder Ähnliches zwischen der ersten Oberfläche 20 und der zweiten Oberfläche 22 sein.

Fig. 2 zeigt eine Filtereinheit 100 gemäß einer Ausführungsform. Die Filtereinheit 100 weist bevorzugt ein Filterelement 102 auf, an welchem das Bauteil 10 angeordnet ist. Das Bauteil 10 weist bevorzugt an einem vorbestimmten Bereich 12 eine Vielzahl von Profilen 14 auf, die anhand eines vorbestimmten Musters 16 zueinander angeordnet sind, sodass die Vielzahl von Profilen 14 eine turbulente Grenzschicht ausbilden kann, um den Strömungswiderstand des Luftstromes an dem Bauteil zu reduzieren. Dabei kann der Luftstrom beispielsweise zuerst durch das Filterelement strömen und anschließend von dem Inneren des Filterelements 102 durch das Bauteil 10 an die Umwelt gelangen.

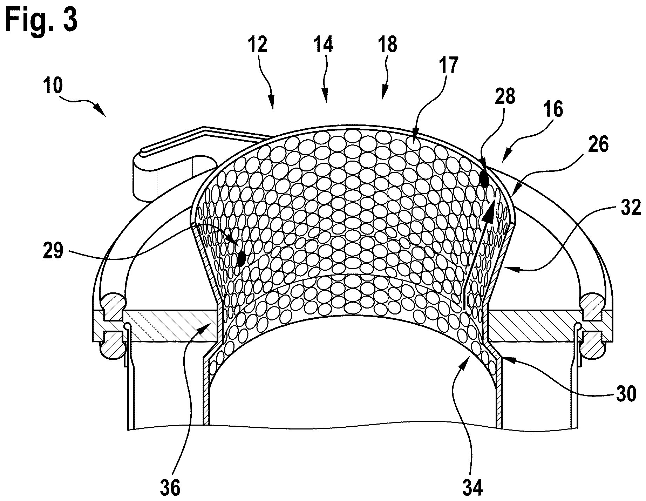

Fig. 3 zeigt ein Bauteil 10 gemäß einer Ausführungsform. Das Bauteil 10 weist eine erste Sektion 30 und eine zweite Sektion 32 auf, wobei die erste Sektion 30 innerhalb der Filtereinheit 100 anordenbar ist, wobei die zweite Sektion 32 außerhalb der Filtereinheit 100 anordenbar ist. Weiter bevorzugt weist die zweite Sektion 32 den vorbestimmten Bereich 12 mit der Vielzahl von Profilen 14 auf, die anhand eines vorbestimmten Musters 16 zueinander angeordnet ist, um somit die turbulente Grenzschicht ausbilden zu können. Weiterhin bevorzugt weist die erste Sektion 30 eine zweite Vielzahl von Profilen 34 auf, welche insbesondere anhand eines weiteren vorbestimmten Musters anordenbar ist, um eine zweite turbulente Grenzschicht auszubilden. Somit kann der Strömungswiderstand des Bauteils 10 weiter reduziert werden. Weiter bevorzugt weist das Bauteil 10 zwischen der ersten Sektion 30 und der zweiten Sektion 32 eine Engstelle 36 auf. Dabei kann bevorzugt die zweite turbulente Grenzschicht dazu eingerichtet sein, den Strömungswiderstand des Luftstroms hin zu der Engstelle 36 zu reduzieren, wobei die turbulente Grenzschicht der zweiten Sektion 32 den Strömungswiderstand des Luftstroms weg von der Engstelle 36 reduziert. Bevorzugt kann die turbulente Grenzschicht dazu eingerichtet sein, den Luftstrom in dem vorbestimmten Bereich 12 entlang einer Flussrichtung 26 des Luftstroms an dem Bauteil 10 zu halten, sodass sich ein Punkt 28, bei dem sich der Luftstrom von dem Bauteil 10 löst, entlang der Flussrichtung 26 und entlang des vorbestimmten Bereichs 12 verschiebt. In der Figur 3 ist ein Beispielpunkt 29 angedeutet, an welche sich der Luftstrom ablösen könnte, wenn keine Vielzahl von Profilen 14 vorgesehen ist. Durch die Anordnung der Vielzahl von Profilen 14 kann der Luftstrom entlang der Flussrichtung 26 länger an einer Oberfläche des Bauteils 10 gehalten werden, um somit weiter den Strömungswiderstand zu reduzieren.

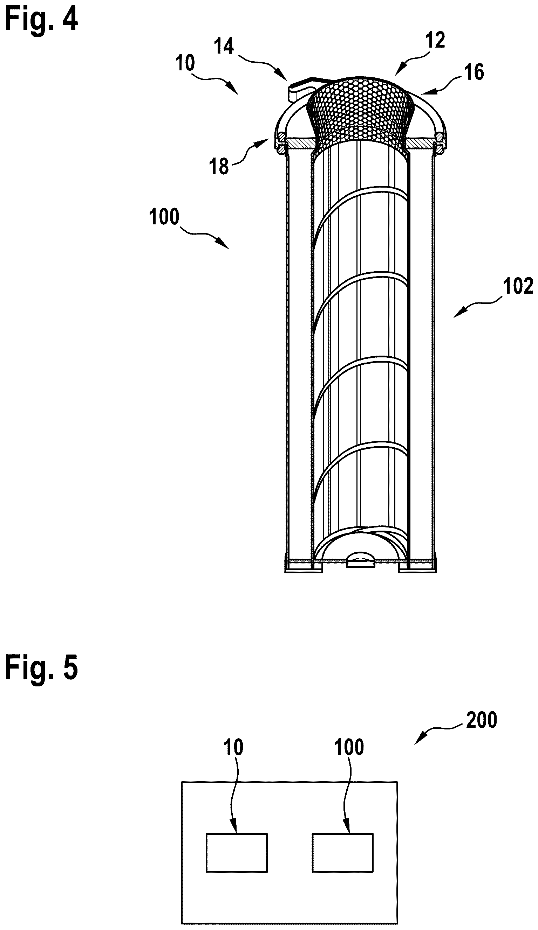

Fig. 4 zeigt eine Filtereinheit 100 gemäß einer Ausführungsform. Die Filtereinheit 100 weist ein Bauteil 10 wie voranstehend und nachfolgend beschrieben als auch ein Filterelement 102 auf. Bevorzugt kann ein Luftstrom durch das Filterelement 102 strömen und anschließend durch das Bauteil 10.

Fig. 5 zeigt ein Luftreinigungssystem 200 gemäß einer Ausführungsform. Das Luftreinigungssystem 200 weist bevorzugt eine Filtereinheit 100 und/oder ein Bauteil 10 wie voranstehend und nachfolgend beschrieben auf.

## Patentansprüche

1. Bauteil (10) für eine Filtereinheit (100), wobei das Bauteil (10) in einem Luftstrom anordenbar ist, welcher zumindest teilweise die Filtereinheit (100) durchströmt, wobei das Bauteil (10) zumindest in einem vorbestimmten Bereich (12) eine Vielzahl von Profilen (14) aufweist, welche anhand eines vorbestimmten Musters (16) zueinander angeordnet sind, wobei die Vielzahl von Profilen dazu eingerichtet ist, zumindest teilweise eine turbulente Grenzschicht auszubilden, um einen Strömungswiderstand des Luftstroms an dem Bauteil (10) zu reduzieren.

2. Bauteil (10) nach Anspruch 1, wobei die Vielzahl von Profilen (14) jeweils eine im Wesentlichen kugelförmige Ausnehmung (17) aufweist.

3. Bauteil (10) nach Anspruch 2, wobei die Vielzahl von im Wesentlichen kugelförmigen Ausnehmungen (17) in Zusammenwirkung mit dem vorbestimmten Muster (16) dazu eingerichtet ist, eine Golfballstruktur (18) auszubilden, um die turbulente Grenzschicht auszubilden.

4. Bauteil (10) nach einem der vorherigen Ansprüche, wobei das Bauteil (10) eine erste Oberfläche (20) und eine zweite Oberfläche (22) aufweist, wobei die erste Oberfläche (20) und die zweite Oberfläche (22) im Wesentlichen orthogonal zueinander angeordnet sind, wobei der vorbestimmte Bereich (12) ein Übergangsbereich (24) zwischen der ersten Oberfläche (20) und der zweiten Oberfläche (22) ist.

5. Bauteil (10) nach einem der vorherigen Ansprüche, wobei die turbulente Grenzschicht dazu eingerichtet ist, den Luftstrom in dem vorbestimmten Bereich (12) entlang einer Flussrichtung (26) des Luftstroms zumindest teilweise an dem Bauteil (10) zu halten, sodass sich ein Punkt (28), bei dem sich der Luftstrom von dem Bauteil (10) löst, entlang der Flussrichtung (26) und entlang des vorbestimmten Bereichs (12) verschiebt.

6. Bauteil (10) nach einem der vorherigen Ansprüche, wobei das Bauteil (10) eine erste Sektion (30) und eine zweite Sektion (32) aufweist, wobei die erste Sektion (30) innerhalb der Filtereinheit (100) anordenbar ist, wobei die zweite Sektion (32) außerhalb der Filtereinheit (10) anordenbar ist, wobei die zweite Sektion (32) den vorbestimmten Bereich (12) mit der Vielzahl von Profilen (14) aufweist, wobei die erste Sektion (30) eine zweite Vielzahl von Profilen (34) aufweist, welche dazu eingerichtet ist, eine zweite turbulente Grenzschicht auszubilden, um den Strömungswiderstand an dem Bauteil (10) in der ersten Sektion (30) zu reduzieren.

7. Bauteil (10) nach Anspruch 6, wobei das Bauteil (10) zwischen der ersten Sektion (30) und der zweiten Sektion (32) eine Engstelle (36) aufweist, wobei die zweite turbulente Grenzschicht in der ersten Sektion (30) dazu eingerichtet ist, den Strömungswiderstand des Luftstroms hin zu der Engstelle (36) zu reduzieren, wobei die turbulente Grenzschicht in der zweiten Sektion (32) dazu eingerichtet ist, den Strömungswiderstand des Luftstroms weg von der Engstelle (36) zu reduzieren.

8. Bauteil (10) nach einem der vorherigen Ansprüche, wobei die Vielzahl von Profilen (14) in Zusammenwirkung mit dem vorbestimmten Muster (16) dazu eingerichtet ist, eine Haifischhaut auszubilden.

9. Filtereinheit (100) aufweisend ein Filterelement (102) und ein Bauteil (10) nach einem der Ansprüche 1 bis 8, wobei die Filtereinheit (100) dazu eingerichtet ist, mittels des Filterelements eine vorbestimmte Auswahl an Elementen aus einem Luftstrom zu filtern, wobei die Filtereinheit (100) dazu eingerichtet ist, den Luftstrom durch das Filterelement (102) und das Bauteil (10) zu führen.

10. Luftreinigungssystem (200) aufweisend ein Bauteil (10) nach einem der Ansprüche 1 bis 8 und/oder eine Filtereinheit (100) nach Anspruch 9.
